# EUROPEAN PATENT APPLICATION

(11) **EP 4 592 705 A1**
(43) Date of publication of application: **30.07.2025**
(21) Application number: 24223478.9
(22) Date of filing: 27.12.2024
(51) Int. Cl.: G01S 7/481, G01S 7/484, G01S 7/486, G01S 17/10

(54) **LASER DETECTION METHOD, APPARATUS AND STORAGE MEDIUM**

(30) Priority: 25.01.2024 CN 202410110745
(71) Applicant: Suteng Innovation Technology Co., Ltd., Shenzhen City Guangdong 518000 (CN)
(72) Inventor: GONG, Changsheng, Shenzhen (CN); CAO, Rentian, Shenzhen (CN)
(74) Representative: Ran, Handong

(57) **Abstract**

The present application provides a laser detection method, apparatus and storage medium, wherein the LiDAR includes an emitting unit, and the method includes: the emitting unit generates multiple emitting pulses within a measurement cycle, wherein at least two emitting pulses among the multiple emitting pulses have different emitting control parameters, and the emitting control parameters are used to adjust the multiple emitting pulses; the emitting unit emits multiple laser signals based on the multiple emitting pulses; the receiving unit receives an echo signals corresponding to the multiple laser signals, and processes the echo signals to obtain the measurement results. The laser detection method according to the embodiment of the present application can make the dynamic range larger, thereby improving the detection accuracy without increasing the consumption of hardware resources.

## Description

### TECHNICAL FIELD

The present application belongs to the field of laser detection technology, and in particular, relates to a laser detection method, apparatus and storage medium.

### BACKGROUND

LiDAR is a mainstream radar sensor currently. It mainly obtains point cloud data through the echo of the emitted laser to detect objects in the environment.

In LiDAR, the sampling rate of the receiving unit is crucial to the accuracy of the measurement, the higher the sampling rate, the higher the power consumption and apparatus cost of the LiDAR. Taking array-type LiDAR as an example, array-type LiDAR involves multiple pixel units, each of which comprises multiple photosensitive components. In order to improve the detection accuracy of LiDAR, a quantity of photosensitive components can be increased to increase the sampling rate. However, this method requires too many hardware resources and places too high demands on the hardware capabilities of LiDAR.

### SUMMARY

Embodiments of this application provide a laser detection method that can improve detection accuracy.

In a first aspect, an embodiment of the present application provides a laser detection method, which is applied to a LiDAR, wherein the LiDAR includes an emitting unit and a receiving unit, the method includes:
generating, by the emitting unit, a plurality of emitting pulses within a measurement cycle, wherein at least two emitting pulses in the plurality of emitting pulses have different emission control parameters, and the emission control parameters are used to adjust the plurality of emitting pulses;
emitting, by the emitting unit, a plurality of laser signals based on the plurality of emitting pulses;
receiving, by the receiving unit, echo signals corresponding to the plurality of laser signals, and
processing the echo signals to obtain a measurement result.

In an embodiment, the emission control parameter includes at least one of the following: emission power, emission pulse width, and duration of a rising edge and/or duration of a falling edge.

In an embodiment, the method further comprises: determining the emission control parameters of the plurality of emitting pulses respectively, according to an emission order corresponding to the plurality of emitting pulses.

In an embodiment, determining the emission control parameters of the plurality of emitting pulses respectively according to an emission order corresponding to the plurality of emitting pulses includes:
obtaining a correspondence between an emission order and a transmission control parameter, wherein the correspondence is preset, or the correspondence is calculated based on at least one of the following: a linear calculation formula relationship, a quadratic calculation formula relationship, and a Gaussian calculation formula relationship;
determining the emission control parameters of the plurality of emitting pulses respectively according to the emission order and the corresponding relationship.

In an embodiment, the emitting unit includes a plurality of laser groups, each laser group includes one or more lasers, the plurality of emitting pulses includes a first emission pulse and a second emission pulse, the plurality of laser groups includes one or more first laser groups and one or more second laser groups, and emitting, by the emitting unit, a plurality of laser signals based on the plurality of emitting pulses, includes:
controlling, by the emitting unit, one or more first laser groups to transmit a first laser signal based on the first emission pulse; and
controlling, by the emitting unit, one or more second laser groups to transmit a second laser signal based on the second emission pulse;
wherein the emission control parameters of the first emission pulse are different from the emission control parameters of the second emission pulse, and the first laser group is different from the second laser group.

In an embodiment, the emitting unit includes a plurality of laser groups, each laser group includes one or more lasers, and the method further includes:
determining emission control parameters for driving the emission pulses of each laser group, according to the detection field of view corresponding to each laser group in the plurality of laser groups.

In an embodiment, the method further comprises:
determining the emission control parameters of the plurality of emitting pulses, according to a current detection scene.

In an embodiment, the method further comprises:
determining the emission control parameters of the plurality of emitting pulses, according to detection results from other measurement cycles before the measurement cycle.

In an embodiment, the method further comprises:
determining, by the emitting unit, an internal measurement start signal as the start time of emitting the laser signal;
determining, by the receiving unit, the internal measurement start signal as a start time of receiving the laser signal, wherein the internal measurement start signal is used to trigger the multiple emission pulses.

In a second aspect, an embodiment of the present application provides a laser detection apparatus, comprising:
a processing module, used for generating a plurality of emitting pulses within a measurement cycle, wherein at least two emitting pulses of the plurality of emitting pulses have different emission control parameters, and the emission control parameters are used to adjust the plurality of emitting pulses; and
a transceiver module, used for emitting a plurality of laser signals based on the plurality of emitting pulses;
the transceiver module is further used for receiving echo signals corresponding to the plurality of laser signals, and processing the echo signals to obtain a measurement result.

A third aspect of an embodiment of the present application provides a laser detection apparatus, comprising a memory, a processor, and a computer program stored in the memory and executable on the processor, wherein the processor implements the steps of the method embodiments when executing the computer program.

A fourth aspect of an embodiment of the present application provides a computer-readable storage medium, wherein the computer-readable storage medium stores a computer program, and when the computer program is executed by a processor, the steps of the method embodiments are implemented.

The emission control parameters of at least two emission pulses in one measurement cycle are different, which can make the dynamic range larger, so that for targets that are too close or too far away, and/or for targets of materials with too high or too low reflectivity, to reduce the situation where the echo signal is over-saturated or the echo signal is too weak, and instead obtain a moderate echo signal, thereby improving the detection accuracy. Further improves the detection accuracy without increasing hardware resources such as photosensitive components, that is, the detection accuracy is improved under low sampling rates, which can save the consumption of hardware resources, reduce the requirements for the hardware capabilities of the LiDAR.

### BRIEF DESCRIPTION OF DRAWINGS

Fig. 1 is a schematic diagram of a laser detection method 100 provided in an embodiment of the present application;
Fig. 2 is a schematic diagram of a LiDAR emitting laser and receiving echo signals provided in an embodiment of the present application;
Fig. 3A is a schematic diagram of an emission control parameter provided by an embodiment of the present application change according to a linear increasing rule;
Fig. 3B is a schematic diagram of an emission control parameter according to an embodiment of the present application changing according to a curve increasing rule;
Fig. 4A is a schematic diagram of emitting laser light and receiving echo signals of a LiDAR provided in an embodiment of the present application;
Fig. 4B is a timing diagram of the emission of a LiDAR provided in an embodiment of the present application;
Fig. 5A is a schematic diagram of emitting laser light and receiving echo signals of a LiDAR provided in an embodiment of the present application;
Fig. 5B is a timing diagram of the emission of the LiDAR provided in an embodiment of the present application;
Fig. 6A is a schematic diagram of emitting laser light and receiving echo signals of a LiDAR provided in an embodiment of the present application;
Fig. 6B is a timing diagram of the emission of the LiDAR provided in an embodiment of the present application;
Fig. 7A is a schematic flow chart of an emitting unit provided in an embodiment of the present application;
Fig. 7B is a schematic flow chart of a receiving unit provided in an embodiment of the present application;
Fig. 7C is a schematic flow chart of an emitting unit provided in an embodiment of the present application;
Fig. 7D is a schematic flow chart of an emitting unit provided in an embodiment of the present application;
Fig. 8A is a receiving timing diagram of a LiDAR provided in an embodiment of the present application;
Fig. 8B is a schematic diagram of superimposed received signals in the analysis area provided in an embodiment of the present application;
Fig. 9 is a schematic diagram of a laser detection apparatus provided in an embodiment of the present application;
Fig. 10 is a schematic diagram of another laser detection apparatus provided in an embodiment of the present application.

### DETAILED DESCRIPTION

The "multiple" refers to two or more. Unless otherwise specified, "/" means or, for example, A/B can mean A or B; "and/or" is a description of the association relationship of associated objects, indicating that there can be three relationships, for example, A and/or B can mean: A exists alone, A and B exist, and B exists alone. The words "first" and "second" are used to distinguish between the same items or similar items with basically the same functions and effects. The words "first" and "second" do not limit the quantity and execution order, and the words "first" and "second" do not limit them to be different.

The division of the above-mentioned functional units and modules is used as an example for illustration. The function allocation can be completed by different functional units and modules as needed, that is, the internal structure of the apparatus can be divided into different functional units or modules to all or part of the functions. The functional units and modules in the embodiment can be integrated in a processing unit, or each unit can exist physically separately, or two or more units can be integrated in one unit. The integrated unit can be implemented in the form of hardware or in the form of software functional units. The names of the functional units and modules are for the convenience of distinguishing each other. The working process of the units and modules can refer to the corresponding process in the aforementioned method embodiment.

The laser detection method in the embodiments of the present application can be widely used in various fields, such as artificial intelligence, unmanned driving systems, automatic driving systems, augmented reality (augmented reality), the fields of autonomous driving include artificial intelligence (Al), artificial intelligence (AR), virtual reality (VR), etc. Autonomous driving is a mainstream application in the field of artificial intelligence. Autonomous driving technology relies on the collaboration of computer vision, radar, monitoring apparatus and global positioning systems to enable motor vehicles to achieve autonomous driving without the need for human active operation. For example, the field of autonomous driving can include smart cars and unmanned vehicles.

The laser detection method involved in the embodiments of present application is mainly performed by a LiDAR.
1. Saturated echo signal: The intensity of the echo signal received by the receiver is too high, exceeding the dynamic range of the receiver, resulting in echo clipping, which is usually accompanied by a broadening of the falling edge, resulting in poor detection accuracy.
2. The echo signal is too weak: The strength of the echo signal received by the receiver is too low, exceeding the dynamic range of the receiver, resulting in poor detection accuracy.
3. Dynamic range is an important parameter of LiDAR. For LiDAR, dynamic range usually refers to the interval between the minimum and maximum signal values that can be identified. When the minimum signal that can be identified is fixed, the larger the dynamic range, the larger the maximum signal value that can be identified.
   Dynamic range is an important indicator for measuring LiDAR. When detecting targets made of materials with different reflectivity, a high dynamic range of emission and reception can avoid the situation where the measurement accuracy deteriorates due to excessive saturation of the echo signal or too weak an echo signal.
4. LiDAR works periodically and completes at least one detection in each detection cycle, that is, one corresponding emission and reception, to obtain detection data. In the detection cycle, one detection can be defined as an analysis area (e.g., point cloud processing process).

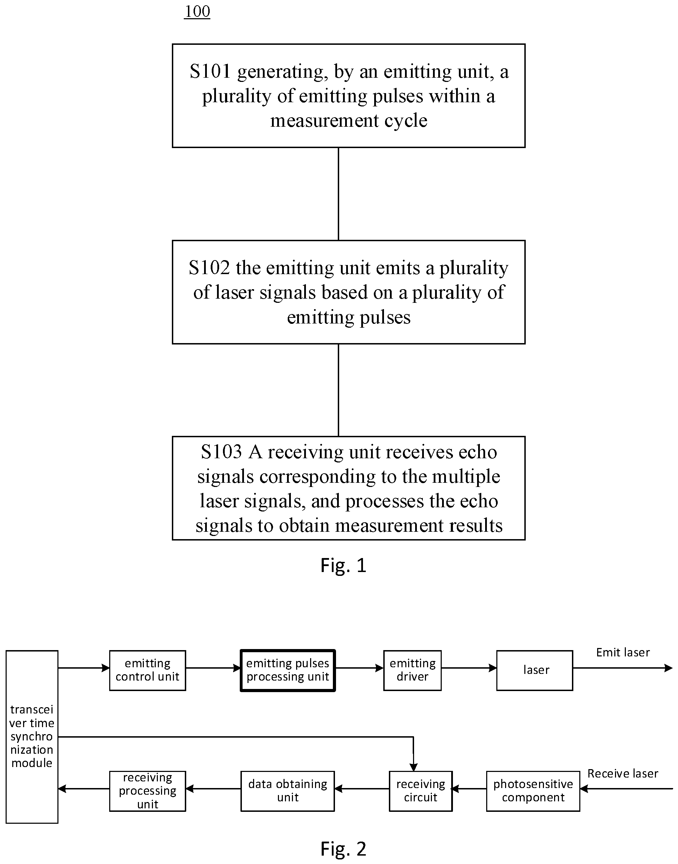

Fig. 1 is a schematic diagram of a laser detection method 100 provided in an embodiment of the present application. The method 100 is applied to a LiDAR, wherein the LiDAR includes an emitting unit.

S101, generating, by an emitting unit, a plurality of emitting pulses within a measurement cycle.

At least two emitting pulses in the plurality of emitting pulses have different emission control parameters, and the emission control parameters are used to adjust the plurality of emitting pulses.

Exemplarily, the emission control parameter includes at least one of the following: emission power, duration of a rising edge or a falling edge, or emission pulse width.

Exemplarily, the emitting unit includes an emitting pulse processing unit and an emitting control unit. The emitting unit can implement S101 through the following steps:
Step 1-a, controlling the emission control unit to send an emission timing order of multiple emitting pulses to the emission pulse processing unit.

Exemplarily, the emission control unit first determines a measurement period and a quantity of measurements, and then determines an emission timing order according to the measurement period and the quantity of measurements.

Step 1-b, controlling the emission pulse processing unit to generate multiple emitting pulses according to the emission timing order and the emission control parameters of the multiple emitting pulses.

Fig. 2 is a schematic diagram of a LiDAR emitting laser and receiving echo signals provided in an embodiment of the present application. The LiDAR includes an emitting unit and a receiving unit. The emitting unit includes: an emitting control unit, an emitting control adjustment unit, an emitting driver and a laser; the receiving unit includes: a receiving processing unit, data obtaining unit, a receiving circuit and a photosensitive component. Exemplarily, the emitting driver, the laser, the receiving circuit and the photosensitive component can be implemented by hardware; the remaining modules can be implemented by software or by hardware.

Fig. 2 shows an implementation of the emission pulse processing unit and emission control unit. The remaining modules in Fig. 2 will be introduced below.

Optionally, before step 1-b, method 100 may further include a step of determining an emission control parameter.

For example, in step 2, the emission control parameters of the multiple emitting pulses are determined respectively according to an emission order corresponding to the multiple emitting pulses.

The multiple emitting pulses may be emitting pulses within multiple measurement cycles, where the multiple measurement cycles include the measurement cycle in S101. The emission order here as the measurement cycle in which a certain emission pulse in the multiple emitting pulses is located, or as the measurement cycle in which the emission pulse is located and the emission order of the emission pulse within the measurement cycle.

Exemplarily, the emitting unit counts a quantity of emitting pulses (cnt_send), and determines the emission control parameter according to the counted number of emissions (cnt_sent).

Exemplarily, step 2 may be:
Step 2-a, obtaining a corresponding relationship between the emission order and the emission control parameters.

Exemplarily, the corresponding relationship is preset, for example, the corresponding relationship is a table preset in advance, and the table is used to indicate the corresponding relationship between the emission order and the emission control parameter. The target emission control parameter can be obtained by looking up the table according to a target emission order.

In an embodiment, the corresponding relationship is calculated based on at least one of the following: a linear calculation relationship, a quadratic calculation relationship, and a Gaussian calculation relationship. According to the target emission order, the target emission control parameter is calculated based on the above calculation relationship.

Step 2-b, determining the emission control parameters of the multiple emitting pulses respectively according to the emission order and the corresponding relationship.

Exemplarily, the emission control parameters of the emission pulses of a measurement cycle may change according to a rule such as linear increase, curve increase, linear decrease, curve decrease, increase first and then decrease, etc.

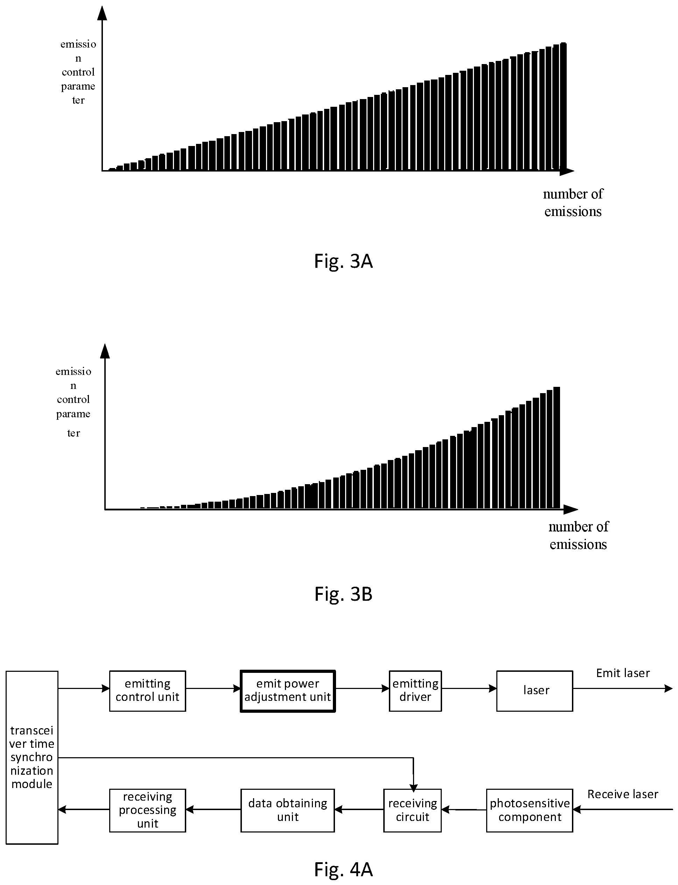

Fig. 3A is a schematic diagram of an emission control parameter according to an embodiment of the present application changing in accordance with a linear increasing rule. Fig. 3B is a schematic diagram of an emission control parameter according to an embodiment of the present application changing in accordance with a curve increasing rule.

As shown in Fig. 3A or Fig. 3B, the horizontal axis is the number of emissions. Exemplarily, when the emission control parameter includes the emission power, the vertical axis in Fig. 3A or Fig. 3B can be the amplitude, which is used to characterize the emission power; when the emission control parameter includes the duration of the rising edge or the duration of the falling edge, the vertical axis in Fig. 3A or Fig. 3B can be time, which is used to characterize the duration of the rising edge or the duration of the falling edge; when the emission control parameter includes the emission pulse width, the vertical axis in Fig. 3A or Fig. 3B can be time, which is used to characterize the duration of the upper emission pulse.

When the emission control parameters include emission power, duration of the rising edge or the falling edge, or two or more sub-parameters in the emission pulse width, different sub-parameters may be the same or different according to change of the number of emissions.

Different types of adjustment curves of emission control parameters (such as Fig. 3A and Fig. 3B above) are matched with the receiving filter to achieve better accuracy.

S102, the emitting unit emits a plurality of laser signals based on a plurality of emitting pulses.

In the plurality of emitting pulses, at least two emission pulses have different emission control parameters in one measurement cycle.

Exemplarily, the emitting unit further includes an emitting driver and a laser. The emitting unit can implement S10 2 through the following steps.

Step 3-a, controlling the emission pulse processing unit to emit a plurality of emitting pulses to the emit driver.

The multiple pulses here are the emission pulses in step 1-b, that is, they satisfy: at least two emission pulses have different emission control parameters in one measurement cycle. As shown in Fig2, the emission pulses processed by the emission pulse processing unit are configured according to the emission control parameters.

Step 3-b: The emission driver drives one or more lasers to emit laser signals based on each emission pulse in the plurality of emission pulses.

Each measurement cycle comprises multiple emission pulses, and each emission pulse corresponds to the light output of one or more emission lasers. As shown in Fig. 2, one emission driver can control one or more lasers to emit laser light.

In one measurement cycle, at least two emission pulses correspond to different laser groups, wherein each laser group includes one or more lasers.

Exemplarily, the plurality of emission pulses includes a first emission pulse and a second emission pulse, and the plurality of laser groups include one or more first laser groups and one or more second laser groups. As an example of S102, the emission unit controls one or more first laser groups to emit a first laser signal based on the first emission pulse; and the emission unit controls one or more second laser groups to emit a second laser signal based on the second emission pulse; wherein the emission control parameters of the first emission pulse and the emission control parameters of the second emission pulse are different, and the first laser group is different from the second laser group.

The emission pulses in one measurement cycle correspond to different laser groups, which can achieve the expansion of the dynamic range in one measurement cycle.

S103: A receiving unit receives echo signals corresponding to the multiple laser signals, and processes the echo signals to obtain measurement results.

The emission control parameters of at least two emission pulses in one measurement cycle are different, which can make the dynamic range larger. For targets that are too close or too far away, and/or for targets with materials with too high or too low reflectivity, it can reduce the situation caused by excessive saturation of echo signals or echo signals being too weak, thereby improving the detection accuracy.

In addition, embodiments of the present application improve the detection accuracy without increasing the hardware resources such as photosensitive components, that is, the detection accuracy is improved at a low sampling rate, which can save the consumption of hardware resources, reduce the requirements for the hardware capabilities of the LiDAR, and has a wider range of applications.

In the laser detection method provided by the present application, the more the number of emission pulses with different emission control parameters within a measurement cycle is, the wider the dynamic range is, and thus the higher the detection accuracy is.

Optionally, before step 1-b, the step of determining the emission control parameters may also have other implementation forms.

For example, the emission unit includes multiple laser groups, each laser group includes one or more lasers, and step 2A determines the emission control parameters for driving the emission pulse of each laser group according to the detection field of view corresponding to each laser group in the multiple laser groups.

The power consumption of the edge field of view is greater than that of the central field of view. By controlling the emission power of the emission pulse used to drive the laser group responsible for detecting the edge field of view to be greater than the emission power of the emission pulse used to drive the laser group responsible for detecting the central field of view, the detection accuracy can be improved. By controlling the emission pulse width of the emission pulse used to drive the laser group responsible for detecting the edge field of view to be greater than the emission pulse width of the emission pulse used to drive the laser group responsible for detecting the central field of view, the detection accuracy can be improved. For an example, by controlling the duration of the rising edge of the emission pulse used to drive the laser group responsible for detecting the edge field of view to be greater than the duration of the rising edge of the emission pulse used to drive the laser group responsible for detecting the central field of view, the detection accuracy can be improved.

For an example, in step 2B, according to the current detection scene, the emission control parameters of the plurality of emission pulses are determined.

If the targets in the current detection scene are all close-range targets, the emission power can be reduced, or the pulse width can be increased, or the duration of the rising edge can be extended to improve the detection accuracy.

For an example, in step 2C, the emission control parameters of the plurality of emission pulses are determined according to the detection results of other measurement cycles before the measurement cycle.

The detection results of other measurement cycles before the current measurement cycle can be called historical frames, and the emission control parameters can be adjusted according to the historical frames received by the receiving unit. When the targets in the current detection scene are all targets made of materials with high reflectivity according to the historical frames, the emission power can be reduced, or the pulse width can be increased, or the duration of the rising edge can be extended, thereby improving the detection accuracy.

Step 2, step 2A to step 2C may be combined to determine the final emission control parameters.

Further examples are given below for different sub-parameters of the emission control parameter.

Example 1: The emission control parameter includes emission power. In one measurement period, at least two emission pulses have different emission powers.

Fig. 4A is a schematic diagram of a LiDAR emitting laser and receiving echo signals provided in an embodiment of the present application.

In Fig. 4A, the emit power adjustment unit adjusts the emit power of the emission pulse so that each emission pulse can be emitted according to the determined power (for the determination method, refer to the relevant description of step 2).

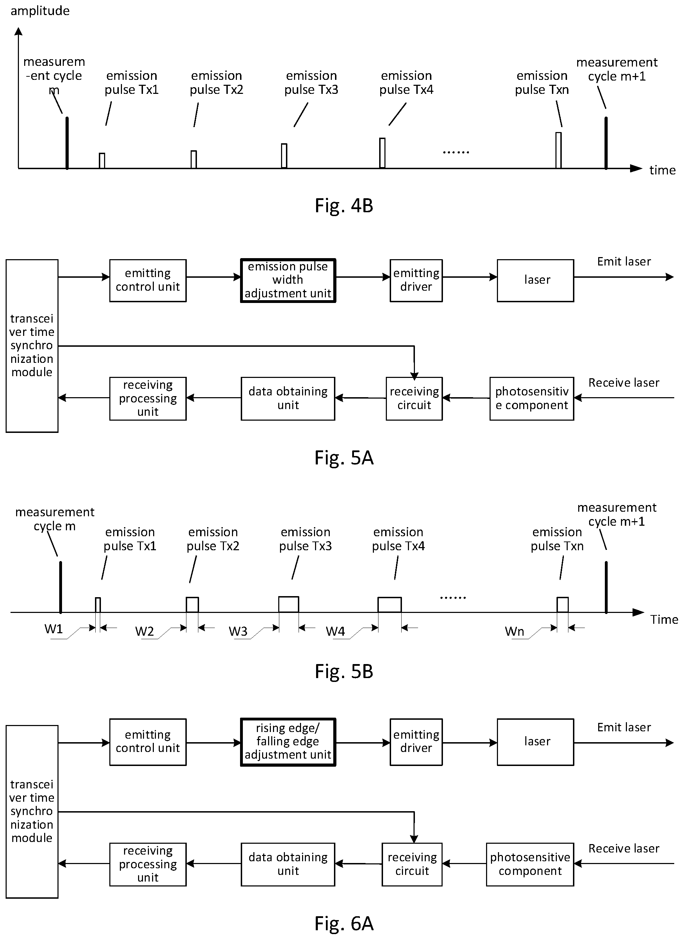

Fig. 4B is an emission timing order diagram of the LiDAR provided in an embodiment of the present application.

As shown in Fig. 4B, taking measurement period m as an example, within the measurement period, the emission powers of the emission pulses Tx1 to Txn are all different.

The low power gear makes it possible to obtain a wider echo signal when obtaining echoes at close distances or from materials with high reflectivity, thereby reducing the situation where the measured echo is in a saturated and distorted state; while the high power gear makes it to obtain a narrower echo signal when obtaining echoes at long distances or from materials with low reflectivity, thereby reducing the situation where the measured echoes are all too small or too weak. The dynamic range is expanded and the detection accuracy is improved.

Example 2: The emission control parameter includes an emission pulse width. In one measurement cycle, at least two emission pulses have different emission pulse widths.

Fig. 5A is a schematic diagram of a LiDAR emitting laser and receiving echo signals according to an embodiment of the present application.

As shown in Fig. 5A, the emission pulse width adjustment unit adjusts the emission pulse width of the emission pulse, so that each emission pulse can be emitted according to the determined pulse width (for the determination method, refer to the relevant description of step 2).

Fig. 5B is an emission timing order diagram of the LiDAR provided in an embodiment of the present application.

As shown in Fig. 5B, taking measurement period m as an example, within the measurement period, the emission pulse widths (w1, w2, w3, w4, ... wn) of emission pulses Tx1 to Txn are all different.

The large pulse width gear enables to obtain an echo signal with a sufficiently long rising edge time when obtaining an echo at a close distance or from a material with a high reflectivity, thereby reducing the situation where the measured echo is in a saturated and distorted state; while the small pulse width gear enables to obtain an echo signal with more concentrated energy when obtaining an echo at a long distance or from a material with a low reflectivity, thereby reducing the situation where the measured echo is too small or too weak. Thus, the dynamic range is expanded and the detection accuracy is improved.

Example 3: The emission control parameter includes the duration of a rising edge and/or the duration of a falling edge. In a measurement cycle, the duration of the rising edge and/or the duration of the falling edge of at least two emission pulses are different.

Fig. 6A is a schematic diagram of another example of the LiDAR emitting laser and receiving echo signals provided in an embodiment of the present application.

As shown in Fig. 6A, taking the duration of the rising edge as an example, the rising edge/falling edge adjustment unit adjusts the duration of the rising edge of the emitting pulse, so that each emitting pulse can be emitted according to the determined duration of the rising edge (for the determination method, refer to the relevant description of step 2).

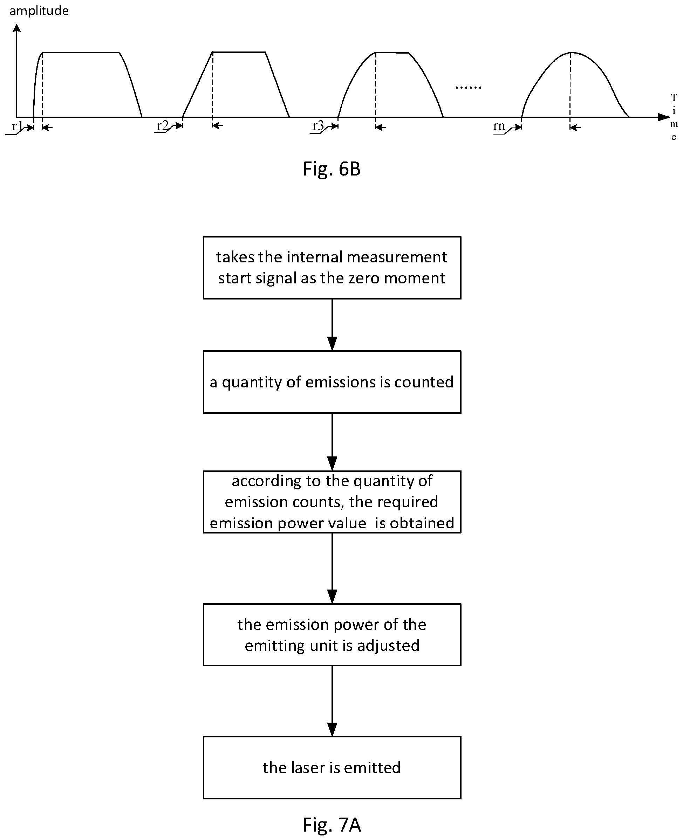

Fig. 6B is an emission timing order diagram of the LiDAR provided in an embodiment of the present application.

As shown in Fig. 6B, the duration of the rising edge of the first emission pulse r1 to the duration of the rising edge of the nth emission pulse rn are different. Although the peak amplitudes of the emission pulses are equal, different rising edge times can effectively improve the dynamic range of the rising edge of the final superimposed echo.

The gear with a longer rising edge time makes it to obtain an echo signal with a more moderate amplitude when obtaining an echo from a close distance or a material with a high reflectivity, thereby reducing the situation where the measured echo is in a saturated and distorted state; while the gear with a shorter rising edge time makes it to obtain an echo signal with a more moderate amplitude when obtaining an echo from a long distance or a material with a low reflectivity, thereby reducing the situation where the measured echo is too small or too weak. Thus, the dynamic range is expanded and the detection accuracy is improved.

The above description is based on the rising edge as an example, and the scheme for the falling edge is similar and will not be described in detail.

The above examples 1 to 3 may be combined.

Optionally, in the multiple emission pulses, the emission control parameters of the emission pulses in at least two measurement cycles are not the same. In other words, the emission control parameters of the emission pulses belonging to different emission groups are not the same. For example, this can be achieved in a variety of ways.

Example 4, multiple emission pulses are emitted in multiple measurement cycles respectively. And the emission pulses in different measurement cycles drive different laser groups to emit lasers, and different lasers are responsible for different detection fields of view. That is to say, one or more emission pulses in measurement cycle #1 drive laser group # 1 to emit lasers, and one or more emission pulses in measurement cycle # 2 drive laser group #2 to emit lasers, and laser group # 1 and laser group # 2 are responsible for different detection fields of view respectively. Different measurement cycles detect different detection fields of view. Therefore, the emission control parameters of the emission pulses in each measurement cycle can be determined according to the corresponding detection fields of view in multiple measurement cycles.

For example, the power consumption of the edge field of view is greater than that of the central field of view. By controlling the emission power in the measurement period corresponding to the edge field of view to be greater than the emission power in the measurement period corresponding to the central field of view, the detection accuracy can be improved. For an example, by controlling the emission pulse width in the measurement period corresponding to the edge field of view to be greater than the emission pulse width in the measurement period corresponding to the central field of view, the detection accuracy can be improved. For an example, by controlling the duration of the rising edge in the measurement period corresponding to the edge field of view to be greater than the duration of the rising edge in the measurement period corresponding to the central field of view, the detection accuracy can be improved.

Example 5: A plurality of emission pulses is emitted in a plurality of measurement cycles respectively, and according to a current detection scenario, an emission control parameter of the transmit pulse in each of the plurality of measurement cycles is determined.

For example, if a target in the detection scene corresponding to measurement cycle #1 is closer than the target in the detection scene corresponding to measurement cycle #2, then the emission control parameters corresponding to measurement cycle #1 can reduce the emission power, increase the pulse width, or extend the duration of the rising edge relative to the emission control parameters corresponding to measurement cycle #2, thereby improving the detection accuracy.

In an embodiment, in order to further improve the detection accuracy, the emitting unit and the receiving unit can be time synchronized.

Exemplarily, as shown in Fig. 2 or Fig. 4A or Fig. 5A or Fig. 6A, the LiDAR may include a transceiver time synchronization module, which is used to synchronize the time of the emission control unit and the receiving processing unit, ensure the synchronization of the working time of the two, and generate the zero time of transceiver. Thus, the emission control unit and the receiving processing unit both use the zero time of transceiver as the starting time of processing, which can further improve the detection accuracy.

The emitting unit determines the internal measurement start signal as the starting time of emitting the laser signal (referred to as the zero emission time); the receiving unit determines the internal measurement start signal as the starting time of receiving the laser signal (referred to as the zero reception time), wherein the internal measurement start signal is used to trigger multiple emission pulses.

In an embodiment, the zero time of emission and the zero time of reception correspond one-to-one, and each zero time of emission and the corresponding zero time of reception are aligned; or, the zero time of emission and the zero time of reception correspond one-to-one, and each zero time of emission and the corresponding zero time of reception have the same delay or advance period.

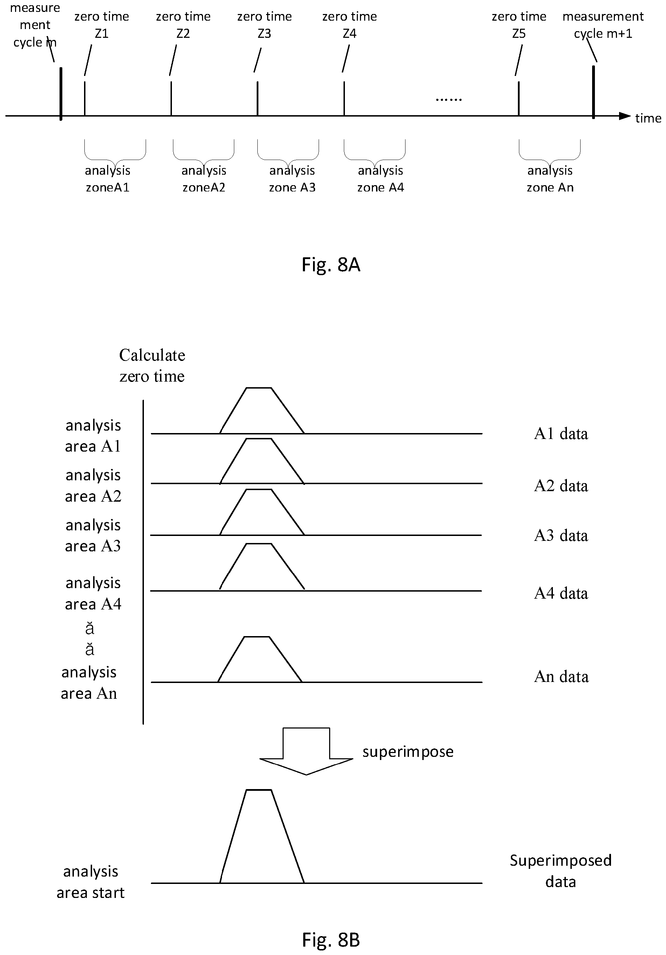

Fig. 8A is a receiving timing diagram of the LiDAR provided in an embodiment of the present application.

in Fig. 8A, the start time of the analysis zone received each time is aligned with the zero time of reception. Thus, the zero time of emission corresponds to the start time of the analysis zone received each time, and each zero time of emission corresponds to the start time of the analysis zone received each time aligned; or, the zero time of emission corresponds to the start time of the analysis zone received each time, and each zero time of emission corresponds to the start time of the analysis zone received each time with the same delay or advance period.

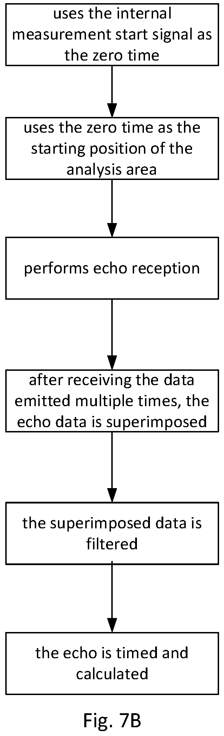

Example 1-A, corresponding to Example 1, Fig. 7A is a schematic flow chart of an emitting unit provided in an embodiment of the present application; Fig. 7B is a schematic flow chart of a receiving unit provided in an embodiment of the present application.

As shown in Fig. 7A, the emitting unit takes the internal measurement start signal (a trigger signal for the emitting unit, which is a digital signal, equivalent to a time) as the zero time; during emission, a quantity of emissions is counted (cnt_send); according to the quantity of emission counts (cnt_sent), the required emission power value (power) is obtained, and then the emission power of the emitting unit is adjusted, and the laser is emitted according to the adjusted emission power.

As shown in Fig. 7B, the receiving unit uses the internal measurement start signal as the zero time; when receiving, uses the zero time as the starting position of the analysis area (zone), and performs echo reception; after receiving the data emitted multiple times, the echo data is superimposed; and the superimposed data is filtered and calculated; after filtering and calculating, the echo is timed and calculated to obtain the final measurement result.

Fig. 8B is a schematic diagram of superimposed received signals in the analysis area provided in an embodiment of the present application. Fig. 8A corresponds to Fig. 8B.

As shown in Fig. 8B, the starting times of the analysis areas A1 to An shown in Fig. 8A are aligned and then superimposed to obtain the final echo.

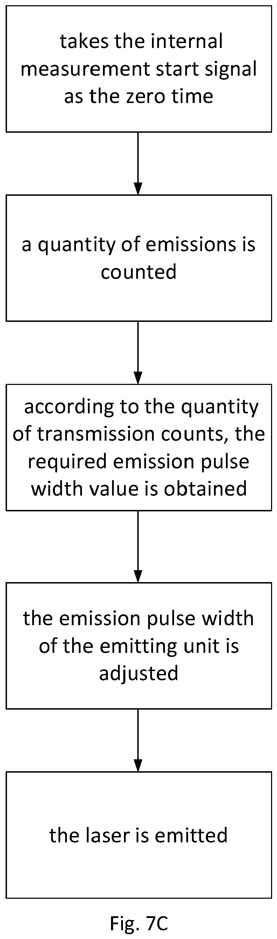

Example 2-A, corresponding to Example 2, Fig. 7C is a schematic flowchart of the emitting unit provided in an embodiment of the present application; Fig. 7B is a schematic flowchart of the receiving unit provided in an embodiment of the present application.

As shown in Fig. 7C, the emitting unit takes the internal measurement start signal (a trigger signal for the emitting unit, which is a digital signal, equivalent to a time) as the zero time; during emission, a quantity of emissions is counted (cnt_send); according to the quantity of transmission counts (cnt_sent), the required emission pulse width value is obtained, and then the emission pulse width of the emitting unit is adjusted, and the laser is emitted according to the adjusted emission pulse width.

For details about the receiving unit, please refer to the relevant description of Fig. 7B.

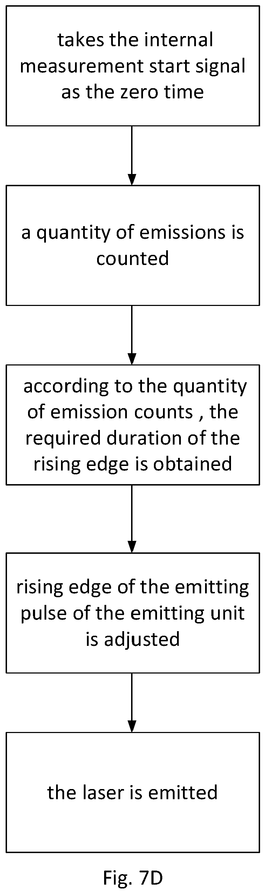

Example 3-A, corresponding to Example 3, Fig. 7D is a schematic flowchart of the emitting unit provided in an embodiment of the present application; Fig. 7B is a schematic flowchart of the receiving unit provided in an embodiment of the present application.

As shown in Fig. 7D, the emitting unit uses the internal measurement start signal (a trigger signal for the emitting unit, which is a digital signal, equivalent to a time) as the zero time; when emitting, a quantity of emissions is counted ( cnt_send); according to the quantity of emission counts (cnt_sent), the required duration of the rising edge is obtained, and then the rising edge of the emitting pulse of the emitting unit is adjusted, and the laser is emitted according to the adjusted rising edge. Similarly, the rising edge can be replaced by the falling edge, which will not be repeated.

For details about the receiving unit, please refer to the relevant description of Fig. 7B above.

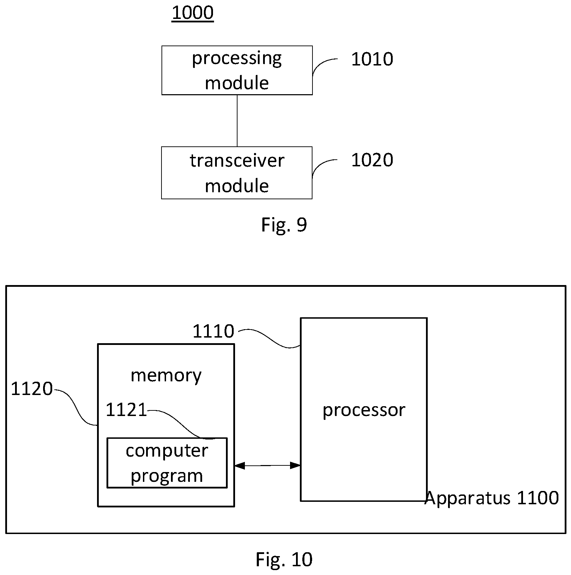

Fig. 9 shows a structural block diagram of an apparatus 1000 provided in an embodiment of the present application.

Referring to Fig. 9, in an embodiment of the present application, the apparatus may include the following modules:
a processing module 1010 is used to generate a plurality of emitting pulses within a measurement cycle, wherein at least two emitting pulses in the plurality of emitting pulses have different emission control parameters, and the emission control parameters are used to adjust the plurality of emitting pulses;
a transceiver module 1020 is used to emit multiple laser signals based on the plurality of emitting pulses;
the transceiver module 1020 is used to receive the echo signals corresponding to the multiple laser signals, and process the echo signals to obtain a measurement result.

The information interaction, execution process, etc. between the apparatus/units are based on the same concept as the method embodiment of the present application. Their functions and technical effects can be found in the method and system embodiment section and will not be repeated here.

The function allocation can be completed by different functional units and modules as needed, that is, the internal structure of the apparatus can be divided into different functional units or modules to complete all or part of the functions described above. The functional units and modules in the embodiment can be integrated in a processing unit, or each unit can exist physically separately, or two or more units can be integrated in one unit. The integrated unit can be implemented in the form of hardware or in the form of software functional units. In addition, the names of the functional units and modules are only for the convenience of distinguishing each other. The working process of the units and modules can refer to the corresponding process in the aforementioned method embodiment.

As shown in Fig. 10, an embodiment of the present application also provides an apparatus 1100, which includes: at least one processor 1110, a memory 1120, and a computer program 1121 stored in the memory and executable on the at least one processor, and when the processor executes the computer program, it implements the steps in any of the method embodiments.

An embodiment of the present application further provides a computer-readable storage medium, wherein the computer-readable storage medium stores a computer program, and when the computer program is executed by a processor, the steps in the method embodiments can be implemented.

An embodiment of the present application provides a computer program product. When the computer program product is run on an electronic apparatus, a mobile terminal can implement the steps in the method embodiments when executing the computer program product.

If the integrated unit is implemented in the form of a software functional unit and sold or used as an independent product, it can be stored in a computer-readable storage medium. The computer program can be stored in a computer-readable storage medium, and the computer program can implement the steps of the method embodiments when executed by the processor. Among them, the computer program includes computer program code, and the computer program code can be in source code form, object code form, executable file or some intermediate form. The computer-readable medium may at least include: any entity or apparatus that can carry the computer program code to the camera/electronic apparatus, recording medium, computer memory, read-only memory (ROM), random access memory (RAM), electric carrier signal, telecommunication signal and software distribution medium. For example, a USB flash drive, a mobile hard disk, a magnetic disk or an optical disk. In some jurisdictions, according to legislation and patent practice, computer-readable media cannot be electric carrier signals and telecommunication signals.

The units and algorithm steps of each example described in conjunction with the embodiments disclosed herein can be implemented in electronic hardware, or a combination of computer software and electronic hardware. Whether these functions are performed in hardware or software depends on the application and design constraints of the technical solution.

The disclosed apparatus/network equipment and methods can be implemented in other ways. For example, the apparatus/network equipment embodiments described above are merely schematic. For example, the division of the modules or units is only a logical function division. There may be other division methods in actual implementation, such as multiple units or components can be combined or integrated into another system, or some features can be ignored or not executed. Another point is that the mutual coupling or direct coupling or communication connection shown or discussed can be through some interfaces, indirect coupling or communication connection of apparatus or units, which can be electrical, mechanical or other forms.

The units described as separate components may or may not be physically separated, and the components shown as units may or may not be physical units, that is, they may be located in one place or distributed on multiple network units.

## Claims

1. A laser detection method, applied to a LiDAR, wherein the LiDAR comprises an emitting unit and a receiving unit, the method comprises:
generating, by the emitting unit, a plurality of emitting pulses within a measurement cycle, wherein at least two emitting pulses in the plurality of emitting pulses have different emission control parameters, and the emission control parameters are used to adjust the plurality of emitting pulses;
emitting, by the emitting unit, a plurality of laser signals based on the plurality of emitting pulses; and
receiving, by the receiving unit, echo signals corresponding to the plurality of laser signals, and processing the echo signals to obtain a measurement result.

2. The method according to claim 1, wherein the emission control parameter comprises at least one of: emission power, emission pulse width, and duration of a rising edge or duration of a falling edge.

3. The method according to claim 1 or 2, further comprising:
determining the emission control parameters of the plurality of emitting pulses respectively according to an emission order corresponding to the plurality of emitting pulses.

4. The method according to claim 3, wherein the determining the emission control parameters of the plurality of emitting pulses respectively according to an emission order corresponding to the plurality of emitting pulses comprises:
obtaining a correspondence between the emission order and the emission control parameter, wherein the correspondence is preset, or the correspondence is calculated according to at least one of: a linear calculation formula relationship, a quadratic calculation formula relationship, and a Gaussian calculation formula relationship; and
determining the emission control parameters of the plurality of emitting pulses respectively according to the emission order and the corresponding relationship.

5. The method according to claim 1, wherein the emitting unit comprises a plurality of laser groups, each of the laser groups comprises one or more lasers, the plurality of emitting pulses comprises a first emission pulse and a second emission pulse, the plurality of laser groups comprises one or more first laser groups and one or more second laser groups, and said emitting, by the emitting unit, a plurality of laser signals based on the plurality of emission pulses, comprising:
controlling, by the emitting unit, the one or more first laser groups to emit a first laser signal based on the first emission pulse; and
controlling, by the emitting unit, the one or more second laser groups to emit a second laser signal based on the second emission pulse,
wherein the emission control parameter of the first emission pulse is different from the emission control parameter of the second emission pulse, and the first laser group is different from the second laser group.

6. The method according to claim 1, wherein the emitting unit comprises a plurality of laser groups, each of the laser groups comprises one or more lasers, and the method further comprises:
determining emission control parameters for driving the emission pulses of each laser group, according to a detection field of view corresponding to each laser group in the plurality of laser groups.

7. The method according to claim 1, further comprising:
determining the emission control parameters of the plurality of emitting pulses, according to a current detection scene.

8. The method according to claim 1, further comprising:
determining the emission control parameters of the plurality of emitting pulses, according to detection results from other measurement cycles before the measurement cycle.

9. The method according to claim 1, further comprising:
determining, by the emitting unit, an internal measurement start signal as the start time of emitting the laser signal; and
determining, by the receiving unit, the internal measurement start signal as a start time of receiving the laser signal, wherein the internal measurement start signal is used to trigger the multiple emission pulses.

10. A laser detection apparatus, comprising:
a processing module, used for generating a plurality of emitting pulses within a measurement cycle, wherein at least two emitting pulses of the plurality of emitting pulses have different emission control parameters, and the emission control parameters are used to adjust the plurality of emitting pulses; and
a transceiver module, used for emitting a plurality of laser signals based on the plurality of emitting pulses,
the transceiver module is further used for receiving echo signals corresponding to the plurality of laser signals, and processing the echo signals to obtain a measurement result.

11. A computer-readable storage medium storing a computer program, wherein the computer program implements the steps of the method according to any one of claims 1 to 9 when executed by a processor.
